## Europäisches Patentamt

## European Patent Office

## Office européen des brevets

(19)

(11) Veröffentlichungsnummer: **0 076 993**
**A1**

# EUROPÄISCHE PATENTANMELDUNG

(12)

(21) Anmeldenummer: 82109131.1

(22) Anmeldetag: 04.10.82

(51) Int. Cl.³: **C 08 G 65/46**

(30) Priorität: 08.10.81 DE 3140025

(43) Veröffentlichungstag der Anmeldung: 20.04.83
Patentblatt 83/16

(84) Benannte Vertragsstaaten: **BE DE FR GB NL**

(71) Anmelder: **BASF Aktiengesellschaft,
Carl-Bosch-Strasse 38, D-6700 Ludwigshafen (DE)**

(72) Erfinder: **Hambrecht, Juergen, Dr., Werderstrasse 30,
D-6900 Heidelberg (DE)**
Erfinder: **Reffert, Rudi Wilhelm, Berliner Strasse 18,
D-6711 Beindersheim (DE)**
Erfinder: **Naarmann, Herbert, Dr., Haardtblick 15,
D-6719 Wattenheim (DE)**
Erfinder: **Schuster, Hans H., Dr., Luitpoldstrasse 166,
D-6700 Ludwigshafen (DE)**
Erfinder: **Echte, Adolf, Dr., Leuschnerstrasse 42,
D-6700 Ludwigshafen (DE)**

(54) **Verfahren zur Entfernung des Katalysators aus Polyphenylenethern.**

(57) Die Erfindung betrifft ein Verfahren zur Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 50 °C in Anwesenheit eines Katalysatorkomplexes aus einem Metallsalz und einem organischen Amin in Gegenwart eines Lösungsmittels im Bereich von 1 : 1 bis 20 : 1 Gewichtsteilen, bezogen auf das monomere Phenol, und gegebenenfalls eines Aktivators, wobei die Abtrennung der Metallionkomponente des Katalysators aus der Reaktionslösung durch Zugabe einer komplexbildenden Mercaptoverbindung erfolgt.

Bevorzugt sind als Mercaptoverbindungen eine aliphatische, aromatische, heterocyclische Mono-, Di-, Tri- oder Polymercaptoverbindung, ein Salz von Mono-, Di-, Tri- oder Polymercaptoverbindungen mit Alkali- oder Erdalkalimetallen, Thiobisalkylthiole und deren Natriumsalze oder Bis- bzw. Trimercaptotriazinverbindungen oder deren Natriumsalze.

Es ist zweckmäßig, daß die Mercaptoverbindung in einer Menge eingesetzt wird, daß mindestens ein Mol Mercaptogruppe auf ein Mol des zu entfernenden Schwermetallions entfällt.

Verfahren zur Entfernung des Katalysators aus Polyphenylenethern

Die Erfindung betrifft ein Verfahren zur Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 50°C in Anwesenheit eines Katalysatorkomplexes aus einem Metallsalz und einem organischen Amin in Gegenwart eines Lösungsmittels im Bereich von 1:1 bis 20:1 Gewichtsteilen, bezogen auf das monomere Phenol, und gegebenenfalls eines Aktivators.

Polyphenylenether und Verfahren zu ihrer Herstellung sind allgemein bekannt und beispielsweise in den US-Patentschriften 3 219 625, 3 306 875, 3 378 505, 3 639 656, 3 642 699 und 3 661 848 beschrieben. Die erhaltenen Polyphenylenether sind hitzefeste Stoffe und als Abmischungskomponenten für Polystyrole geeignet.

Die zur Herstellung der Polyphenylenether am häufigsten angewendeten Verfahren umfassen die Selbstkondensation einwertiger Phenole durch Einwirkung von Sauerstoff in Gegenwart von Katalysatoren. Als Katalysatoren werden bevorzugt Metall-Amin-Komplexe, insbesondere Kupfer-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionsmischung beendet. Dies geschieht durch die Verwendung von wäßrigen Lösungen von anorganischen oder organischen Säuren wie es z.B. in der DE-OS 21 05 372 beschrieben ist. Verwendet werden auch Polycarbonsäuren und/oder Polyaminocarbonsäuren (vgl. DE-OS 23 64 319) oder andere Chelatisierungsmittel wie Nitrilotriessigsäure und ihre Natriumsalze

Fre/P

0076993

(vgl. DE-OS 25 32 477), letztere auch in Kombination mit quartären Ammoniumsalzen (vgl. US-PS 4 026 870). Beschrieben ist auch die Katalysatorabtrennung mit Hilfe komplexbildender Mittel aus der Gruppe des Bisguanids (vgl. DE-OS 24 60 325). Neben dem Abbrechen der oxidativen Selbstkondensation hat die Zugabe des komplexbildenden Agens auch die möglichst vollständige Entfernung des Katalysators aus dem Polyphenylenether zum Ziel, da Verunreinigungen des Polymeren durch Metallreste zu einer Verschlechterung des gesamten Eigenschaftsbildes des Polymeren führen. Insbesondere die Oxidationsempfindlichkeit und die Eigenfarbe werden betroffen.

Alle bisherigen Maßnahmen zur Entfernung von Katalysatorresten haben den Nachteil, daß zu einer vollständigen Entfernung (Restmenge des Metallions <10ppm) mehrfache Extraktionsschritte bei z.T. komplizierten Trennverfahren angewendet werden müssen. Häufig wird dabei der Charakter des Polyphenylenethers verändert.

Der Erfindung lag deshalb die Aufgabe zugrunde, ein einfaches und hochwirksames Verfahren zur Abtrennung der Katalysatorreste aus der Reaktionslösung zu entwickeln.

Diese Aufgabe wird erfindungsgemäß dadurch gelöst, daß die Abtrennung der Metallionkomponente des Katalysators aus der Reaktionslösung durch Zugabe einer komplexbildenden Mercaptoverbindung erfolgt.

Die Mercaptoverbindungen sind bevorzugt eine aliphatische, aromatische, heterocyclische Mono-, Di-, Tri- oder Polymercaptoverbindung, ein Salz von Mono-, Di-, Tri- oder Polymercaptoverbindungen mit Alkali- oder Erdalkalimetallen, Thiobisalkylthiole und deren Natriumsalze oder Bis- bzw. Trimercaptotriazinverbindungen oder deren Natriumsalze.

0076993

Ñach bevorzugter Verfahrensweise wird die Mercaptoverbindung in einer Menge eingesetzt, daß mindestens ein Mol Mercaptogruppe auf ein Mol des zu entfernenden Schwermetallions entfällt.

Zur Ausführung der Polykondensation wird üblicherweise Sauerstoff in die 15 bis 50°C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist. Nach besonders geeignetem Verfahren wird der Katalysator aus Kupfersalz, vorzugsweise Kupfer-I-Bromid, Amin und 0,01 bis 5 Gew.-% 2,6-Dimethylphenol in die Vorlage der gelösten Monomeren eindosiert.

Bei dem für die Polykondensation bekannten Katalysatorkomplex handelt es sich üblicherweise um eine Kombination aus einem Amin, z.B. n-Dibutylamin, Diethylamin, Picolin, Chinolin, Pyridinbasen, Triisopropylamin, Dimethylisopropanolamin, Triethanolamin, Triisopropanolamin oder Diisopropanolamin mit einem Kupfersalz wie Kupfer-I-Bromid, Kupfer-I-Chlorid, Kupfer-I-Jodid, Kupfer-II-Acetat, Kupfer-II-Propionat, Kupfer-II-Acetessigester oder Kupfer-II-Acetylacetonat. Ein bevorzugter Bereich der Menge der eingesetzten Amine liegt bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1, d.h. maximal bis zu einem Überschuß des 20-fachen am Lösungsmittel, bezogen auf das

Monomere.

Als Lösungsmittel werden Benzol, Toluol und aliphatische Kohlenwasserstoffe, vorzugsweise $C_6$- bis $C_{10}$-Kohlenwasserstoffe, verwendet.

Darüber hinaus kann die Reaktionsmischung einen Aktivator wie ein Diarylguanidin oder ein Diarylformamidin enthalten (vgl. US-PS 3 544 515).

Bei den üblichen Verfahren wird die Polykondensationsreaktion bei Temperaturen zwischen 15 und 50, vorzugsweise 18 und 22°C durchgeführt. Hierzu wird der Sauerstoff in die 15 bis 50°C warme Lösung des Monomeren in Gegenwart des Aminkomplexes eingeleitet. Die Reaktion ist in kurzer Zeit beendet, d.h. das Katalysatorgemisch wird in 0,1 bis 1,5 Stunden in die Monomerlösung unter Sauerstoff- oder Luftbegasung eindosiert.

Wenn die Polykondensation die gewünschte Ausbeute und das Polymere das gewünschte Molekulargewicht erreicht hat, enthält die Reaktionslösung 1 bis 30 Gew.-% Polyphenylenether, 0,005 bis 1,5 Gew.-% Metallionen und etwa 0,1 bis 6,0 Gew.-% Amin sowie gegebenenfalls geringe Mengen anderer Materialien. Diese Reaktionslösungen werden erfindungsgemäß mit den komplexbildenden Mercaptoverbindungen zur Abtrennung des im Polymeren enthaltenen Metallkatalysators behandelt. Die Art und Weise der Zugabe der Mercaptoverbindungen ist dabei unkritisch. So können die Mercaptoverbindungen in Substanz ebenso wie in wäßriger Lösung in Form ihrer Alkali- oder Erdalkalisalze hinzugegeben werden. Die Zugabe kann auf einmal oder in mehreren Anteilen, kontinuierlich oder diskontinuierlich, mit und ohne zusätzliches Wasser erfolgen. Die Abtrennung der Metallkomponente kann dabei in geeigneten Verfahrensvorrichtungen wie z.B. in Filterpressen,

0076993

in Dekantationstanks, Schälzentrifugen und ähnlichem vorgenommen werden.

Die Kontaktzeit des komplexbildenden Agens mit der katalysatorhaltigen Polyphenylenether-Phase kann innerhalb weiter Grenzen variieren. Bevorzugt sind Zeiten von 1 Minute bis 5 Stunden. Häufig genügen Reaktionszeiten von 5 bis 60 Minuten. Die bevorzugte Reaktionstemperatur liegt zwischen 25°C und 90°C, es sind jedoch auch Temperaturbereiche darunter und darüber anwendbar.

Bevorzugte Komplexierungsmittel auf Basis der erfindungsgemäßen Mercaptoverbindungen sind aliphatische, aromatische, heterocyclische Mono-, Di-, Tri- oder Polymercaptoverbindungen, ein Salz von Mono-, Di-, Tri- oder Polymercaptoverbindungen mit Alkali- oder Erdalkalimetallen, Thiobisalkylthiole und deren Natriumsalze oder Bis- bzw. Trimercaptotriazinverbindungen oder deren Natriumsalze.

Beispiele für besonders geeignete komplexbildende Mercaptoverbindungen sind: Cystein, Thiomilchsäure, 2-Amino-thiophenol, 1,3-Dimercapto-2,2-pentamethylenpropan, 2,2'-Thiobisethanol, 1,1'-Thiobis-2-propanthiol, 0,0'-Dimercaptobenziden, Dimercaptophenol, Trimercaptoanilin, 2-Oxytrimercaptonaphthalin, Thioglykolsäure-ß-amino-naphthalid und Trimercapto-s-triazin, wobei die zuletzt genannte Verbindung die am besten geeignete Mercaptoverbindung ist.

Die komplexbildenden Mercaptoverbindungen werden in solchen Mengen eingesetzt, daß mindestens 1 Mol Mercaptogruppe auf 1 Mol des zu entfernenden Metallions entfällt. Im allgemeinen werden je Äquivalent Schwermetallion 1,2 bis 10 Äquivalente Mercaptogruppen eingesetzt. Besonders bevorzugt werden 2 bis 5 Äquivalente Mercaptogruppen verwendet.

0076993

O.Z. 0050/035477

In manchen Fällen kann zur rascheren Sedimentation des dabei resultierenden Metallkomplexniederschlags ein Flockungsmittel hinzugegeben werden. Solche Fleckungsmittel sind z.B. Eisen(III)salze, Aktivkohle u.a..

Die Abtrennung der Metallkatalysatoren bis zur vollständigen Entfernung aus dem Polyphenylenether kann durch mehrfache Zugabe der erfindungsgemäßen komplexbildenden Mercaptoverbindung und anschließende Abtrennung der resultierenden Metallkomplexe gemäß der bereits beschriebenen Verfahren erfolgen. Bevorzugt wird jedoch eine Ausführungsform der Erfindung wonach die gesamte Katalysatormenge in einem Komplexier- und Separierschritt aus dem Polymeren entfernt wird.

Nach der Entfernung der metallischen Komponente als Komplex kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z.B. der Polyphenylenether durch Ausfällen aus einer Reaktionslösung mittels einem Antilösungsmittel, wie beispielsweise einem Überschuß von einem Alkohol, z.B. Methanol, isoliert werden. Das filtrierte Produkt kann in Alkohol aufgeschlämmt und - falls gewünscht - mit einem Entfärbungsmittel gerührt werden und dann wird der Polyphenylenether abfiltriert und nach herkömmlichen Verfahren in Filme, Fasern, ausgeformte Gegenstände dgl. umgewandelt. Andere Alkohole wie Isopropanol, Propanol oder Ethanol können ebenfalls verwendet werden.

Die Aminkomponente des Katalysators kann durch Destillation oder nach anderen herkömmlichen Verfahren zurückgewonnen werden.

Wie bereits erwähnt, ist ein bevorzugter Aspekt des vorliegenden Verfahrens die Herstellung von Polyphenylenetherlösungen mit niedrigem Metallgehalt, aus denen die polymeren Stoffe nach sog. Totalisolationsverfahren, z.B. durch Sprühtrocknung, Dampfausfällung und Heißwasserzerkrümelung, gewonnen werden können. Dies erleichtert die wirtschaftliche Anwendung solcher Verfahren, die hinsichtlich der erforderlichen Energie, der Lösungsmittelverluste u. dgl. wirtschaftlicher sind als die bekannten Ausfällungsverfahren.

Die mit der Erfindung erzielten Vorteile bestehen insbesondere darin, daß mit Hilfe der komplexbildenden Mercaptoverbindungen die Metallkatalysator-Reste aus den Polyphenylenethern nahezu vollständig entfernt werden können. Die resultierenden Polyphenylenether zeichnen sich bei Rest-Katalysatormetall-Gehalten von <10 Gew.-ppm durch eine außerordentliche Farb- und Oxidationsstabilität bei der Verarbeitung im Temperaturbereich über 250°C aus. Die Abtrennung der Metallkatalysatoren nach dem erfindungsgemäßen Verfahren ist einfach und erfolgt zumeist in einem Schritt. Dabei können niedrig- und relativ hochkonzentrierte Polyphenylenoxid-Reaktionslösungen (bis zu 25 Gew.-%) ohne Probleme umgesetzt werden.

In den folgenden Beispielen sind die angegebenen Teile Gewichtsteile, es sei denn, es ist anders angegeben.

Die Intrinsikviskosität wird durch Messung an 0,5 %igen Lösungen in Chloroform bei 30°C bestimmt.

0076993

## Beispiel 1

Herstellung von Poly-(2,6-dimethyl-1,4-phenylen)-ether

Eine Vorlage von 1,3 g Cu-I-Bromid und 20 g 1,4-Dimethylpentylamin und 2 g 2,6-Dimethylphenol (= DMP) wird bei $20^\circ$C 5 Minuten unter Einleiten von Sauerstoff gerührt, und dann wird im Verlauf von 30 Minuten in eine Lösung von 204 g DMP in 1 400 Toluol eindosiert. Anschließend wird noch 1 Stunde bei $20^\circ$C gerührt. Die Reaktion wird in Gegenwart von 30 Liter Sauerstoff pro Stunde durchgeführt.

Reinigung der Reaktionslösung

Nach Beendigung der Reaktion wird die Polymerlösung mit 0,4 g Trimercapto-s-triazin versetzt und während 10 Minuten heftig bei $50^\circ$C gerührt. Der anfallende Cu-Chelatkomplex wird abgetrennt und die verbleibende Polyphenylenoxid-Lösung durch Zugabe von Methanol ausgefällt. Nach dem Trocknen wies das feste Polyphenylenoxid die in Tabelle 1 aufgeführten Eigenschaften auf.

## Beispiel 2

Herstellung des Poly-(2,6-dimethyl-1,4-phenylen)-ethers

Eine Lösung von 1,2 g Cu-I-Chlorid, 1,9 g Natriumbromid und 0,3 g Methyltrioctylammoniumchlorid in 15 ml Methanol werden zu 1100 ml Ethylbenzol hinzugegeben und bei $40^\circ$C gerührt. Anschließend gibt man 14 g Di-n-butylamin und eine Lösung von 275 g 2,6-Dimethylphenol in 400 ml Ethylbenzol hinzu und begast die Reaktionslösung mit 0,1 $m^3$ Sauerstoff pro Stunde während 90 Minuten. Danach wird die Sauerstoffzufuhr abgedreht und das Reaktionsgefäß mit Stickstoff gespült.

0076993

Reinigung der Reaktionslösung

Nach Beendigung der Reaktion wird die Polymerlösung mit 4,5 g einer 15 %igen wäßrigen Lösung des Natriumsalzes des Trimercapto-s-triazins während 20 Minuten bei 60°C heftig gerührt. Die wäßrige Phase, die den Metallkomplex enthält, wird separiert und das Polymerisat aus der organischen Phase durch Zugabe von Methanol ausgefällt. Der Rest-Kupfer-Gehalt des Polyphenylenoxids sowie dessen Grenzviskosität sind in Tabelle 1 angegeben.

Vergleichsbeispiel A (nicht erfindungsgemäß)

Die Herstellung des Polyphenylenoxids erfolgte wie in Beispiel 1 beschrieben. Zur Reinigung der Polymerlösung wurden 4,0 g Ethylendiamintetraessigsäure (vgl. Beispiel 1 DE-OS 23 64 319) hinzugegeben und die Polymerlösung eine weitere Stunde bei 50°C gerührt. Die Polymerlösung wurde zentrifugiert und die organische Phase abgetrennt. Das Polymere wurde durch Zugabe von Methanol ausgefällt. Nach dem Trocknen ergaben sich für das Polyphenylenoxid die in Tabelle 1 angegebenen Zahlen.

Vergleichsbeispiel B (nicht erfindungsgemäß)

Die Herstellung des Poly-(2,6-dimethyl-1,4-phenylen)-ethers erfolgt wie in Beispiel 1 beschrieben. Die Reinigung der Polymerlösung von verbliebenem Metallkatalysator wurde mit Di-o-tolyl-bisguanid vorgenommen. Hierzu wurden 4,0 g Di--o-tolyl-bisguanid zu der Reaktionsmischung hinzugegeben (vgl. Beispiel 1 DE-OS 24 60 325) und 30 Minuten bei 40°C gerührt. Anschließend wurde das Polymere unter Ansäuern und Abdekantieren der organischen Phase mit Methanol ausgefällt. Das resultierende Polyphenylenoxid hatte die in Tabelle 1 angegebenen Eigenschaften.

0076993

## Tabelle 1

| Beispiel | Grenzviskosität [dk/g] | Kupfer-Gehalt [ppm] |
|---|---|---|
| 1 | 0,8 | 7 |
| 2 | 0,6 | 5 |
| Vergleichsbeispiel (nicht erfindungsgemäß) | | |
| A | 0,7 | 16 |
| B | 0,5 | 21 |

0076993

## Patentansprüche

1. Verfahren zur Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 50°C in Anwesenheit eines Katalysatorkomplexes aus einem Metallsalz und einem organischen Amin in Gegenwart eines Lösungsmittels im Bereich von 1:1 bis 20:1 Gewichtsteilen, bezogen auf das monomere Phenol, und gegebenenfalls eines Aktivators, dadurch gekennzeichnet, daß die Abtrennung der Metallionkomponente des Katalysators aus der Reaktionslösung durch Zugabe einer komplexbildenden Mercaptoverbindung erfolgt.

2. Verfahren nach Anspruch 1, dadurch gekennzeichnet, daß als Mercaptoverbindung aliphatische, aromatische, heterocyclische Mono-, Di-, Tri- oder Polymercaptoverbindungen, Thiobisalkylthiole und deren Natriumsalze oder Bis- bzw. Trimercaptotriazinverbindungen oder deren Natriumsalze eingesetzt werden.

3. Verfahren nach einem der vorhergehenden Ansprüche, dadurch gekennzeichnet, daß die Mercaptoverbindung in einer Menge eingesetzt wird, daß mindestens ein Mol Mercaptogruppe auf ein Mol des zu entfernenden Schwermetallions entfällt.

Europäisches Patentamt

**EUROPÄISCHER RECHERCHENBERICHT**

00 76993

Nummer der Anmeldung

EP 82 10 9131

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | C 08 G 65/46 |
| X | US-A-3 681 285 (H. NAARMANN)<br>* Ansprüche * | 1-3 | |
| | --- | | |
| A | DE-C-1 265 411 (AKU GE)<br>* Anspruch * | 1 | |
| | ----- | | |

|  | RECHERCHIERTE SACHGEBIETE (Int. Cl. ³) |
|---|---|
|  | C 08 G<br>C 08 L |

Der vorliegende Recherchenbericht wurde für alle Patentansprüche erstellt.

| Recherchenort<br>DEN HAAG | Abschlußdatum der Recherche<br>14-12-1982 | Prüfer<br>DERAEDT G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82